# DEMANDE DE BREVET EUROPEEN

(11) **EP 4 184 158 A1**
(43) Date de publication de la demande: **24.05.2023**
(21) Numéro de dépôt: 22208243.0
(22) Date de dépôt: 18.11.2022
(51) Int. Cl.: G01N 27/90

(54) **DÉTECTION DE BRULURES LORS DE L'USINAGE D'UNE PIÈCE MÉCANIQUE PAR LA MÉTHODE DE COURANTS DE FOUCAULT**

(30) Priorité: 19.11.2021 FR 2112285
(71) Demandeur: Commissariat à l'Énergie Atomique et aux Énergies Alternatives, 75015 Paris (FR)
(72) Inventeur: SERGEEVA-CHOLLET, Natalia, 91191 Gif-sur-Yvette Cedex (FR); NOZAIS, Frédéric, 91191 Gif-sur-Yvette Cedex (FR)
(74) Mandataire: Atout PI Laplace

(57) **Abrégé**

L'invention a pour objet un capteur pour la caractérisation des zones de brulures dans une pièce mécanique en un matériau électriquement conducteur au cours d'une opération d'usinage d'une surface de la pièce mécanique par un appareil d'usinage. Le capteur est destiné à être monté sur l'appareil d'usinage. Le capteur comprend :
- au moins un module détecteur à courant de Foucault sans contact, et comprenant :
o une bobine émettrice parcourue par un courant électrique alternatif pour générer un champ magnétique de référence ;
o une bobine réceptrice configurée pour capter un signal de mesure selon la variation des caractéristiques électromagnétiques dans la zone d'acquisition associée au cours de l'usinage ;

- une unité de traitement de données configurée pour générer, au cours de l'usinage, une cartographie des zones de brulures dans la surface usinée à partir du signal de mesure de la bobine réceptrice.

## Description

### Champ d'application

La présente invention concerne le domaine de la caractérisation des zones de brulures dans une pièce mécanique résultant d'une opération d'usinage de type ponçage ou de rectification (« grinding » en Anglais). Plus particulièrement, l'invention concerne la détection, la localisation et la quantification des zones de brulures par la technique de courant de Foucault.

L'invention trouve application, à titre d'exemples non limitatifs, dans les opérations d'usinage de pièce électriquement conductrices et/ou ferromagnétiques pour l'automobile, l'aéronautique, le nucléaire ou le spatial ou la robotique.

### Problème soulevé

Les opérations d'usinage de ponçage d'une surface d'une pièce mécanique consistent en l'opération de décapage ou de modification de l'état de ladite surface par une destruction du matériau composant la pièce mécanique au niveau de la surface usinée. De la même manière, les opérations d'usinage de rectification consiste à un procédé de finalisation d'une pièce mécanique via le traitement de la surface de la pièce avec la matière abrasive à la surface d'une meule. Il est utilisé pour donner un profil particulier à la pièce lorsque la meule a été au préalable usinée au profil complémentaire. Dans les deux procédés d'usinage, la destruction est réalisée par phénomène de frottement résultant des opérations simultanées suivantes :
- une mise en rotation permanente de la pièce mécanique selon un axe normal à la surface traitée selon une vitesse de rotation prédéterminée.
- une mise en contact de la surface traitée avec une surface abrasive d'une pièce d'usinage selon une pression prédéterminée.
Les pièces issues du procédé de ponçage ou de rectification présentent souvent des zones de brulures à cause du frottement subi par la surface traitée. Ces zones de brulures correspondent à des régions surfaciques à une certaine profondeur présentant une détérioration de la robustesse mécanique de la pièce. La minimisation de la détérioration de robustesse mécanique des pièces issues du procédé de ponçage ou de rectification est d'une importance majeure dans les applications où la pièce, suite à son intégration, subit de fortes contraintes mécaniques avec un risque de rupture lors de son exploitation. Dans ce qui suit, le terme « opération d'usinage » inclut notamment les opérations de ponçage ou de rectification ou tout procédé de traitement mécanique de surface pouvant engendrer des brulures par frottement.

Les zones de brulures sont généralement caractérisées postérieurement à l'usinage. Il en résulte que, les pièces présentant des zones de brulures qui ne vérifient pas les seuils de spécifications techniques sont inexploitables car la détérioration de la robustesse mécanique par brulures dans la pièce usinée est irréversible.

Dans les matériaux électriquement conducteurs, les zones de brulures présentent une variation de la valeur de conductivité électrique σ du matériau par rapport aux zones non brulées. La variation de la valeur de conductivité électrique σ est liée au matériau de la pièce usinée et dégrée de brulure. En effet, la variation de la conductivité présente une courbe croissante pour des faibles brulures, et une variation décroissante pour des brulures extrêmement fortes. (référence la thèse de doctorat intitulée « Développement de capteurs flexibles à courant de Foucault : applications à la caractérisation des propriétés électromagnétiques des matériaux et à la détection de défauts par imagerie statique» de «Benjamin Délabré »).

Plus particulièrement, dans les matériaux ferromagnétiques les zones de brulures présentent une variation de la valeur de conductivité électrique σ et une variation de la perméabilité magnétique µ du matériau par rapport aux zones non brulées. La variation de perméabilité magnétique µ et la variation de conductivité électrique σ dépendent du matériau de la pièce usinée et du dégrée de brulure (faible ou fort). A titre d'exemple, pour une pièce en acier de type 18NiCr5-4, la variation du signal pour les brulures légères et moyennes est dû à une variation croissante desdits paramètres électromagnétiques. Pour les brulures fortes et très fortes, le sens de variation desdits paramètres électromagnétiques s'inverse.

Cette variation des caractéristiques électromagnétiques permet de détecter les zones de brulures dans la pièce mécanique usinée en utilisant un capteur à courant de Foucault.

Dans ce contexte, un problème technique à résoudre est la détection, la localisation et la quantification des zones de brulures sur une pièce mécanique en temps réel pendant l'opération d'usinage. Un autre problème technique à résoudre est le contrôle des paramètres de commande de l'opération d'usinage de manière à minimiser l'évolution des zones de brulures et ainsi améliorer la robustesse mécanique de la pièce usinée.

### Art antérieur/ Restrictions de l'état de l'art

La demande de brevet français FR3021115A1 décrit un procédé de fabrication d'une tête de contrôle d'un capteur de contrôle non destructif à courants de Foucault. La solution proposée par ce brevet ne propose pas un dispositif ou une méthode pour caractériser les zones de brulures en temps réel lors de l'usinage (la détection, la localisation et la quantification). De plus, la solution proposée par ce brevet ne propose pas un dispositif ou une méthode pour contrôler des paramètres de commande de l'opération d'usinage de manière à minimiser l'évolution des zones de brulures.

La thèse de doctorat intitulée « Développement de capteurs flexibles à courant de Foucault : applications à la caractérisation des propriétés électromagnétiques des matériaux et à la détection de défauts par imagerie statique» de «Benjamin Delabre » illustre un procédé d'optimisation de capteurs à courant de Foucault pour l'évaluation des paramètres électromagnétiques d'un matériau. Un inconvénient de la solution proposée par cette publication est qu'elle n'est pas compatible avec une caractérisation en temps réel lors de l'usinage.

### Réponse au problème et apport solution

Pour pallier les limitations des solutions existantes en ce qui concerne la détection, la localisation et la quantification des zones de brulures sur une pièce mécanique en temps réel pendant l'opération d'usinage , l'invention propose plusieurs modes de réalisation d'un capteur à courant de Foucault et propose une implémentation spécifique dans un appareil d'usinage. Le dimensionnement du capteur selon l'invention permet une haute sensibilité de détection, la quantification des zones de brulures et la réalisation d'une cartographie des brulures sur la surface traitée avec précision. L'implémentation selon l'invention dans l'appareil d'usinage permet de réaliser une caractérisation en temps réel, in-situ des zones de brulures de manière à contrôler le procédé d'usinage en améliorant la qualité mécanique des pièces usinées. Cela permet d'améliorer la qualité de pièces obtenues, reduire de nombre de pièces rebutées pour brulures extrêmes après l'usinage et de supprimer le temps de contrôle post-usinage.

### Résumé /Revendications

L'invention a pour objet un capteur pour la caractérisation des zones de brulures dans une pièce mécanique en un matériau électriquement conducteur au cours d'une opération d'usinage d'une surface de la pièce mécanique par un appareil d'usinage. Le capteur est destiné à être monté sur l'appareil d'usinage. Le capteur comprend :
- un premier groupe de modules détecteurs (11) à courant de Foucault sans contact disposés sur une rangée de manière à former une première ligne de détection (L1), chaque module détecteur (11) à courant de Foucault comprenant :
   ∘ une bobine émettrice parcourue par un courant électrique alternatif pour générer un champ magnétique de référence ;
   ∘ une bobine réceptrice configurée pour capter un signal de mesure selon la variation des caractéristiques électromagnétiques dans la zone d'acquisition associée au cours de l'usinage ;
- une unité de traitement de données configurée pour générer au cours de l'usinage, une cartographie de la localisation et de la quantification des zones de brulures dans la surface usinée à partir du signal de mesure de la bobine réceptrice.

Selon un aspect particulier de l'invention, la bobine émettrice et la bobine réceptrice sont cylindriques.

Selon un aspect particulier de l'invention, la bobine réceptrice est constituée d'un empilement d'une pluralité de bobines élémentaires cylindriques.

Selon un aspect particulier de l'invention, la bobine émettrice cylindrique est empilée avec la bobine réceptrice cylindrique tel que la surface latérale de la bobine émettrice cylindrique passe par l'axe central de la bobine réceptrice cylindrique.

Selon un aspect particulier de l'invention, le diamètre de la bobine émettrice cylindrique et de la bobine réceptrice cylindrique est compris entre 3mm et 10mm.

Selon un aspect particulier de l'invention, chaque module détecteur de la première ligne de détection est séparé du module détecteur adjacent par une seconde distance prédéterminée supérieure à la moitié du diamètre de la bobine émettrice cylindrique.

Selon un aspect particulier de l'invention, le capteur comprend en outre un second groupe de modules détecteurs à courant de Foucault disposés sur une rangée de manière à former une seconde ligne de détection parallèle à la première ligne de détection. Les modules détecteurs du second groupe sont placés en quinconce par rapport aux modules détecteurs du premier groupe.

L'invention a également pour objet un appareil d'usinage d'une surface d'une pièce mécanique en un matériau électriquement conducteur comprenant :
- Un support tournant destiné à accueillir la pièce mécanique et configuré pour mettre en rotation ladite pièce autour d'un axe perpendiculaire à la surface usinée avec une vitesse de rotation prédéterminée ;
- Un capteur selon l'invention; pour caractériser des zones de brulures dans la pièce mécanique au cours de l'usinage ; l'au moins un module détecteur à courant de Foucault étant placé en regard d'une zone d'acquisition associée de ladite surface à une première distance prédéterminée non nulle ;
- Une pièce d'usinage présentant une surface abrasive placée en contact avec une zone d'usinage de ladite surface de manière à détruire de la matière en surface de la zone d'usinage lors de la rotation de la pièce mécanique.

Selon un aspect particulier de l'invention, la première distance prédéterminée est comprise entre 0,3mm et 1mm.

Selon un aspect particulier de l'invention, l'appareil d'usinage comprend en outre une unité de contrôle configuré pour :
- commander une pression exercée par la surface abrasive sur la zone d'usinage lors de l'opération d'usinage ;
- commander la vitesse de rotation de la pièce mécanique lors de l'opération d'usinage.

Selon un aspect particulier de l'invention, l'unité de contrôle est reliée au capteur par une boucle de rétroaction et commande la pression exercée et/ou la vitesse de rotation en fonction du résultat de comparaison de l'amplitude du signal de mesure avec un seuil de brulure prédéterminée.

Selon un aspect particulier de l'invention, le capteur comprend une pluralité de modules détecteurs à courant de Foucault disposés en rangée de manière à caractériser à chaque instant d'acquisition un rayon de la surface usinée à partir de l'axe de rotation.

Selon un aspect particulier de l'invention, l'appareil d'usinage comprend en outre un système de déplacement pour déplacer l'au moins un module détecteur selon un mouvement de translation rectiligne avec une période spatiale prédéterminée et une période temporelle prédéterminée pour contrôler sa position par rapport à l'axe de rotation de la pièce mécanique. Le mouvement de translation rectiligne décrit un rayon de la surface usinée à partir de l'axe de rotation.

L'invention a également pour objet un procédé de caractérisation des zones de brulures dans une pièce mécanique en un matériau électriquement conducteur lors d'une opération d'usinage d'une surface de la pièce mécanique par un appareil d'usinage selon l'invention comprenant les étapes suivantes :
i- monter la pièce mécanique sur le support tournant et déclencher la rotation de ladite pièce ;
ii- pour chaque module détecteur ; acquérir une pluralité de signaux de mesure de brulure pendant au moins un tour de la pièce mécanique pour calibrer le capteur; chaque signal d'acquisition étant associé à une zone d'acquisition défilant devant ledit module détecteur pendant la rotation ;
iii- démarrer l'opération d'usinage en mettant en contact la surface abrasive à la zone d'usinage ;
iv- pour chaque module détecteur ; acquérir au cours de l'usinage une pluralité de signaux de mesure de brulure pendant une pluralité de tours de la pièce mécanique pour caractériser les zones de brulures; chaque signal d'acquisition étant associé à une zone d'acquisition défilant devant ledit module détecteur pendant la rotation ;
v- générer et afficher une cartographie des zones de brulures dans la surface usinée par l'unité de traitement de données.

Selon un aspect particulier de l'invention, le procédé de caractérisation des zones de brulures comprend en outre les étapes suivantes :
iv'- comparer au moins un signal de mesure généré par un module détecteur pendant l'étape iv) à un seuil de brulure prédéterminée par l'unité de contrôle ;
iv"- commander, par l'unité de contrôle, la pression exercée et/ou la vitesse de rotation selon le résultat de comparaison ;

Selon un aspect particulier de l'invention, le procédé de caractérisation des zones de brulures (Z1) selon comprend en outre l'étape suivante : déplacer au moins un module détecteur selon un mouvement de translation rectiligne avec une période spatiale prédéterminée et une période temporelle prédéterminée pour contrôle sa position par rapport à l'axe de rotation de la pièce mécanique.

### Brève Description des Dessins

D'autres caractéristiques et avantages de la présente invention apparaîtront mieux à la lecture de la description qui suit en relation aux dessins annexés suivants.
[Fig. 1] la figure 1 représente un premier mode de réalisation de l'appareil d'usinage comprenant un capteur à courant de Foucault pour la détection des zones de brulures en temps réel.
[Fig. 2] La figure 2 le fonctionnement d'un module détecteur à courant de Foucault du capteur des brulures selon l'invention.
[Fig. 3a] la figure 3a représente une vue en perspective d'un premier exemple d'un module détecteur du capteur à courant de Foucault selon l'invention.
[Fig. 3b] la figure 3b représente une vue en perspective d'un second exemple d'un module détecteur du capteur à courant de Foucault selon l'invention.
[Fig. 3c] la figure 3c représente une vue en perspective d'un troisième exemple d'un module détecteur du capteur à courant de Foucault selon l'invention.
[Fig. 3d] la figure 3d représente une vue en perspective d'un quatrième exemple d'un module détecteur du capteur à courant de Foucault selon l'invention.
[Fig. 3e] la figure 3e représente une vue de dessus du troisième ou du quatrième exemple d'un module détecteur du capteur à courant de Foucault selon l'invention.
[Fig. 4a] la figure 4a représente les étapes de caractérisation par un premier mode de réalisation selon l'invention du capteur de brulures dans une pièce mécanique pendant l'opération d'usinage.
[Fig. 4b] la figure 4b représente les étapes de caractérisation par un second mode de réalisation selon l'invention du capteur de brulures dans une pièce mécanique pendant l'opération d'usinage.
[Fig. 5] la figure 5 représente une vue de dessus d'un troisième mode de réalisation selon l'invention du capteur de brulures dans une pièce mécanique pendant l'opération d'usinage.
[Fig. 6] la figure 6 illustre un mode de réalisation de l'unité d'acquisition du capteur de brulures selon l'invention.
[Fig. 7] la figure 7 illustre les étapes d'un procédé de caractérisation des zones de brulures dans une pièce mécanique lors d'une opération d'usinage par le premier mode de réalisation de l'appareil d'usinage.
[Fig. 8a] la figure 8a représente un second mode de réalisation de l'appareil d'usinage comprenant un capteur à courant de Foucault pour la détection des zones de brulures en temps réel.
[Fig. 8b] la figure 8b illustre les étapes d'un procédé de caractérisation des zones de brulures dans une pièce mécanique lors d'une opération d'usinage par le second mode de réalisation de l'appareil d'usinage.

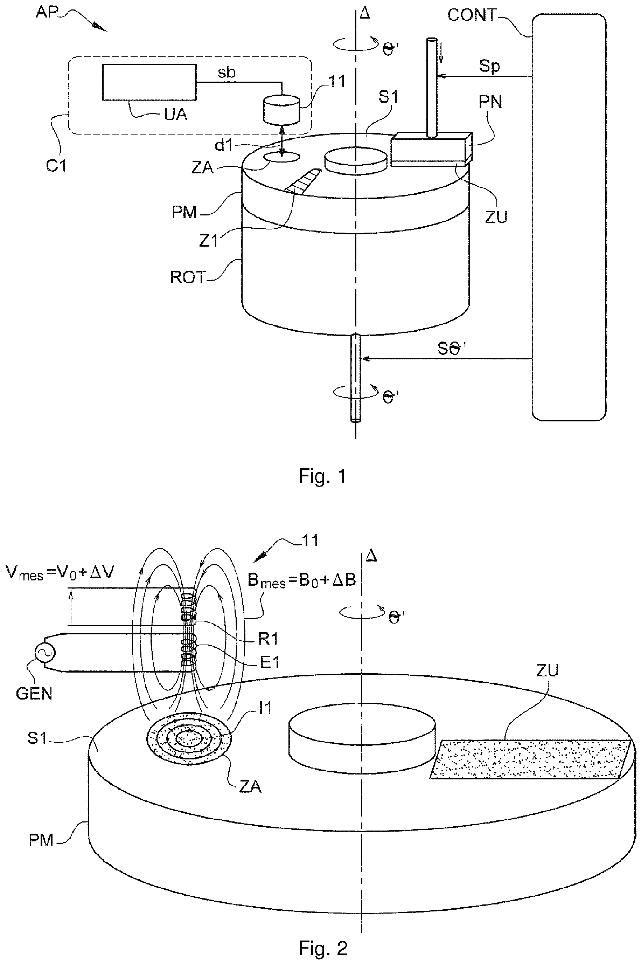

La figure 1 représente un premier mode de réalisation de l'appareil d'usinage AP comprenant un capteur à courant de Foucault pour la détection des zones de brulures en temps réel sur une surface usinée S1 d'une pièce mécanique PM. L'appareil d'usinage AP comprend un support tournant ROT, un capteur de brulures C1, une pièce d'usinage PN et une unité de contrôle CONT.

Le support tournant ROT est destiné à accueillir la pièce mécanique PM à traiter. La pièce mécanique PM est fixée mécaniquement au support tournant ROT de manière à obtenir une liaison d'encadrement. Le support tournant ROT est mis en rotation via un actionneur non représenté par souci de simplification (moteur et tige de transmission par exemple). Cela entraine par transmission mécanique la rotation de la pièce mécanique traitée PM autour d'un axe Δ perpendiculaire à la surface usinée S1 avec une vitesse de rotation prédéterminée θ'.

La pièce d'usinage PN présente une surface abrasive inférieure placée en contact avec une zone d'usinage ZU de la surface S1. La surface abrasive est appliquée sur la surface à usiner S1 selon une pression prédéterminée p de manière à détruire progressivement de la matière en surface de la zone d'usinage lors de la rotation de la pièce mécanique PM. A titre d'exemple, le déplacement rectiligne de la pièce d'usinage PN selon une direction orthogonale à la surface S1 est réalisé par un bras de déplacement solidaire à ladite pièce d'usinage PN.

L'unité de contrôle CONT est configurée pour commander les paramètres de l'opération d'usinage :
- la pression p exercée par la surface abrasive sur la zone d'usinage ZU lors de l'opération d'usinage via un premier signal de contrôle sp ;
- et la vitesse de rotation de la pièce mécanique (PM) lors de l'opération d'usinage via un second signal de contrôle sθ'.

Le capteur de brulures C1 est un capteur à courant de Foucault comprenant au moins un module détecteur 11 et une unité d'acquisition UA. Le capteur de brulures C1 est configuré pour la détection, la localisation et la quantification, en temps réel, des zones de brulures (Z1 par exemple) dans la surface traitée S1 de la pièce mécanique PM. Comme expliqué précédemment, une zone de brulure Z1 est caractérisée par une variation des caractéristiques électromagnétiques par rapport aux zones non brulées du matériau constituant la pièce PM. Plus particulièrement, dans le cas d'un matériau ferromagnétique une variation de la conductivité électrique s et de la perméabilité magnétique µ est observée dans les zones de brulures Z1 par rapport aux valeurs intrinsèques caractéristiques du matériau.

Chaque module détecteur 11 à courant de Foucault est placé au regard d'une zone d'acquisition ZA de la surface traitée S1. Chaque module détecteur 11 est placé à une distance non nulle d1 de séparation entre d'une part la face inférieure du module détecteur 11 et d'autre part la surface usinée S1.

Le module détecteur 11 n'est pas monté en contact avec la surface S1 pour permettre la rotation de la pièce PM lors de l'usinage et ainsi cartographier toute la surface qui défile devant le module détecteur 11 pendant l'usinage. Ainsi, si on modélise la zone d'acquisition ZA associé à chaque module détecteur 11 par un cercle, la surface scannée par un module détecteur 11 décrit un disque troué après un tour de la pièce autour de l'axe Δ. L'implémentation du module détecteur 11 à une distance d1 non nulle de la surface S1 permet de réaliser la caractérisation des zones de brulures dans une partie de la surface S1 défilante devant ledit module en temps réel pendant le déroulement l'opération d'usinage. La mise en contact du module détecteur 11 avec la surface S1 pendant la rotation de la pièce PM autour de l'axe Δ engendre la détérioration du module détecteur 11 et de la surface S1 à cause des frottements. Le choix de la distance d1 ne doit pas dépasser un seuil maximal pour ne pas réduire drastiquement la sensibilité du module détecteur 11 et ainsi dégrader la qualité de la caractérisation.

Avantageusement, un module détecteur 11 est placé au regard de la surface S1 à une distance d1 choisie entre 0.3mm et 1mm, de préférence à 0.5mm pour assurer une meilleure sensibilité des zones de brulures sans risque de détérioration des modules détecteurs 11 lors de la rotation de la pièce PM.

Avantageusement, l'ensemble des modules détecteurs 11 sont montés sur un substrat rigide pour éviter les variations des positions de chacun des modules détecteurs 11 résultants des vibrations lors de l'opération d'usinage.

L'unité d'acquisition UA est un circuit de traitement de signaux configuré pour recevoir les signaux de mesures sb générés par chacun des modules détecteurs 11 à chaque instant d'acquisition tₙ et générer une cartographie des zones de brulures dans la surface usinée S1. La fréquence d'échantillonnage f2 des signaux de mesures sb est supérieure à N fois la fréquence de rotation f1= θ'/2π de la pièce mécanique PM avec N un entier naturel non nul. Cela permet d'obtenir N mesures pendant un tour. Chacune correspond à une position angulaire de la surface S1 qui défile devant l'au moins un module de détection. A titre d'exemple, la fréquence d'acquisition (f2) est choisie égale à 40kHz et la fréquence de rotation de la pièce est de 1Hz (équivalent à 60 tour par minute), le ratio est alors égal à 40×10³. Ainsi, pour chaque module de détection, le nombre de points caractérisés de la surface par tour est égal à 40×10³. Le ratio détermine la résolution angulaire de la cartographie de brulures. Dans le cas d'un agencement de plusieurs modules linéairement de manière à former un rayon, l'espace entre modules définit la résolution radiale.

Alternativement, la synchronisation de l'unité d'acquisition UA est déterminée par un signal de mesure de position angulaire θ correspondant à la coordonnée angulaire de la zone qui défile devant le détecteur à un instant t lors de la rotation de PM autour de Δ. La coordonnée angulaire θ est déterminée par un capteur de position angulaire (non représenté) embarqué dans l'appareil d'usinage. Ainsi, l'unité d'acquisition UA est configurée pour réaliser une acquisition à chaque passage d'une position angulaire θ appartenant à un groupe de positions angulaires θ préalablement défini.

La figure 2 illustre le fonctionnement d'un module détecteur 11 à courant de Foucault du capteur des brulures C1 embarqué dans la machine d'usinage AP pendant l'opération d'usinage.

Comme indiqué précédemment, pendant l'usinage la pièce mécanique PM est mise en rotation autour de l'axe Δ et la zone d'usinage ZU de la surface S1 est mise en contact avec la pièce d'usinage PN selon une pression déterminée (non représentée ici). A titre illustratif non limitatif, et par souci de simplification le capteur C1 comprend un seul module détecteur 11. Le module détecteur 11 comprend une bobine émettrice E1 parcourue par un courant électrique alternatif pour générer un champ magnétique de référence. Le courant électrique alternatif est généré par une source de courant GEN à une fréquence prédéterminée fₘₑₛ. La profondeur de détection dans le matériau est déterminée par la fréquence fₘₑₛ. Lorsque la fréquence fₘₑₛ de la source de courant GEN augmente, la profondeur de la mesure dans le matériau diminue (épaisseur de peau). D'un autre côté, la résolution surfacique augmente avec la fréquence car les courants de la bobine émettrice se concentrent dans une région réduite de la surface usinée. Inversement, lorsque la fréquence fₘₑₛ de la source de courant GEN diminue, la profondeur de la mesure dans le matériau augmente (épaisseur de peau) et la résolution surfacique diminue.

Le module détecteur 11 comprend en outre une bobine réceptrice R1 placée à proximité de la bobine émettrice E1 et configurée pour générer un signal de mesure Vₘₑₛ selon la variation des caractéristiques électromagnétiques dans la zone d'acquisition ZA associée. Nous allons expliquer dans ce qui suit le fonctionnement du module détecteur 11.

La bobine émettrice E1 étant parcourue par un courant alternatif I crée un champ magnétique variable traversant la surface S1 de la pièce au niveau de la zone d'acquisition ZA. Cela induit l'apparition des courants de Foucault I1 au niveau de la zone d'acquisition ZA. Les courants de Foucault engendrent un champ magnétique de réaction qui s'oppose à la variation du champ magnétique de la bobine émettrice E1. Le champ de réaction modifie la force électromotrice de la bobine émettrice E1 et permet de fournir une information sur l'état du matériau au niveau de la zone d'acquisition ZA. Le champ de réaction dépend, de la conductivité électrique σ et de la perméabilité magnétique µ de la pièce. La bobine réceptrice R1 baigne ainsi dans le champ magnétique résultant du champ magnétique de référence et du champ magnétique d'opposition. Ainsi, la tension mesurée Vₘₑₛ aux bornes de la bobine réceptrice R1 dépend, de la conductivité électrique σ et de la perméabilité magnétique µ de la pièce dans la zone d'acquisition ZA.

En l'absence d'une brulure dans la zone d'acquisition ZA, la conductivité électrique σ est égale à la conductivité électrique intrinsèque σᵢₙₜ du matériau constituant la pièce PM. La perméabilité magnétique µ est égale à la perméabilité magnétique intrinsèque µᵢₙₜ du matériau constituant la pièce PM. Ainsi, la bobine réceptrice R1 baigne dans un champ magnétique étalon B₀ correspondant à l'état initial de la pièce mécanique en absence de brulures et la tension mesurée Vₘₑₛ aux bornes de la bobine réceptrice R1 est égale à la valeur étalon V_{0.}

Lorsqu'une zone de brulure Z1 défile devant le module détecteur 11 (dans la zone d'acquisition ZA), le module détecteur voit un matériau présentant une perméabilité magnétique µ= µᵢₙₜ + Δµ et une conductivité électrique σ₌ σᵢₙₜ + Δσ. La variation des caractéristiques électromagnétiques dans la zone de brulure induit une variation des courants de Foucault I1. La variation des courants de Foucault induit une variation ΔB dans le champ magnétique de mesure Bₘₑₛ=B_{0 +} ΔB. Il en résulte une variation ΔV dans la valeur de tension mesurée aux bornes de la bobine réceptrice R1 qui baigne dans le champ magnétique de mesure Bₘₑₛ.

La distance séparant le module détecteur 11 de la surface usinée doit être choisie de manière à avoir une intersection entre le champ magnétique émis par la bobine émettrice E1 et la zone d'acquisition ZA pour induire les courants de Foucault indispensable pour la détection de brulures. Avantageusement, la bobine émettrice E1 est placée du côté de la surface traitée S1 pour favoriser la création des courants de Foucault et donc améliorer la sensibilité du module détecteur.

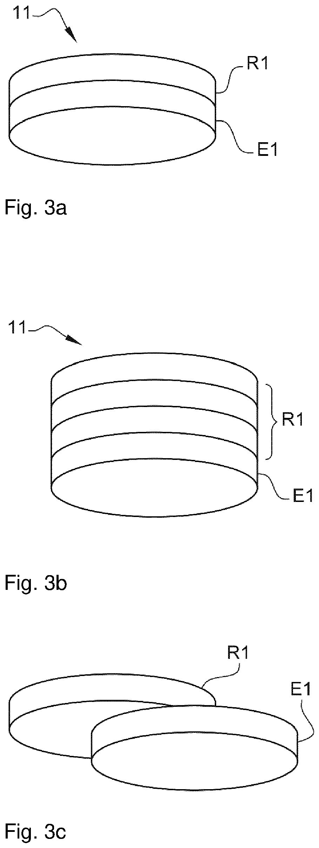

La figure 3a représente une vue en perspective d'un premier exemple d'un module détecteur du capteur à courant de Foucault selon l'invention. La bobine émettrice E1 est une bobine cylindrique unitaire et la bobine réceptrice R1 est une bobine cylindrique unitaire. Les deux bobines émettrices E1 et réceptrice R1 sont superposées les unes sur l'autre avec un alignement de leurs axes centraux.

La figure 3b représente une vue en perspective d'un second exemple d'un module détecteur du capteur à courant de Foucault selon l'invention. La bobine émettrice E1 est une bobine cylindrique unitaire. La bobine réceptrice R1 est une bobine cylindrique volumique réalisée avec la superposition d'une pluralité de bobines unitaires cylindriques connectées en série. Les deux bobines, émettrice E1 et réceptrice R1, sont superposées l'une sur l'autre avec un alignement de leurs axes centraux.

La figure 3c représente une vue en perspective d'un troisième exemple d'un module détecteur du capteur à courant de Foucault selon l'invention. La bobine émettrice E1 est une bobine cylindrique unitaire et la bobine réceptrice R1 est une bobine cylindrique unitaire. Les deux bobines, émettrice E1 et réceptrice R1, sont superposées l'une sur l'autre tel que la surface latérale externe de la bobine réceptrice R1 passe par l'axe central de la bobine émettrice E1. Cette combinaison offre une sensibilité supérieure à celle des figures 3a et 3b avec alignement des axes.

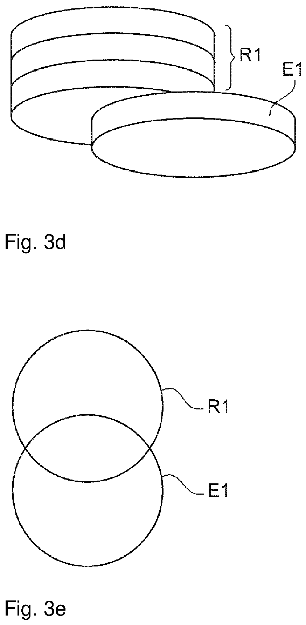

La figure 3d représente une vue en perspective d'un quatrième exemple d'un module détecteur du capteur à courant de Foucault selon l'invention. La bobine émettrice E1 est une bobine cylindrique unitaire. La bobine réceptrice R1 est une bobine cylindrique volumique réalisée avec la superposition d'une pluralité de bobines unitaires cylindriques connectées en série. Les deux bobines, émettrice E1 et réceptrice R1, sont superposées l'une sur l'autre tel que la surface latérale externe de la bobine réceptrice R1 passe par l'axe central de la bobine émettrice E1. La combinaison du décalage de la bobine réceptrice R1 par rapport à la bobine émettrice E1 et de l'utilisation d'une bobine volumique augmente la sensibilité du module détecteur 11 par rapport aux autres exemples présentés précédemment.

La figure 3e représente une vue de dessus du troisième ou du quatrième exemple d'un module détecteur du capteur à courant de Foucault selon l'invention. On montre la disposition de la bobine réceptrice R1 non axialement alignée par rapport à la bobine émettrice E1 telle que la surface latérale du cylindre de la bobine réceptrice R1 passe par l'axe central de la bobine émettrice E1.

A titre d'exemple d'illustration et sans perte de généralité, on considère un module détecteur 11 composé d'une bobine émettrice E1 unitaire et une bobine réceptrice volumique R1 composée de trois bobines unitaires. La bobine réceptrice R1 est superposée sur la bobine émettrice E1 avec un décalage axial tel que présenté dans la figure 3e. Chaque bobine unitaire des deux bobines E1 et R1 est un cylindre comprenant 5 spires et ayant un diamètre externe de 3mm. Le module est placé à une distance de 0,5mm de la surface usinée S1. Cette configuration est sensible à la variation de changement de propriétés électromagnétiques de la pièce avec une précision géométrique correspondant à un cube de longueur=0.2mm, de largeur=0,1mm et de profondeur=0.1mm.

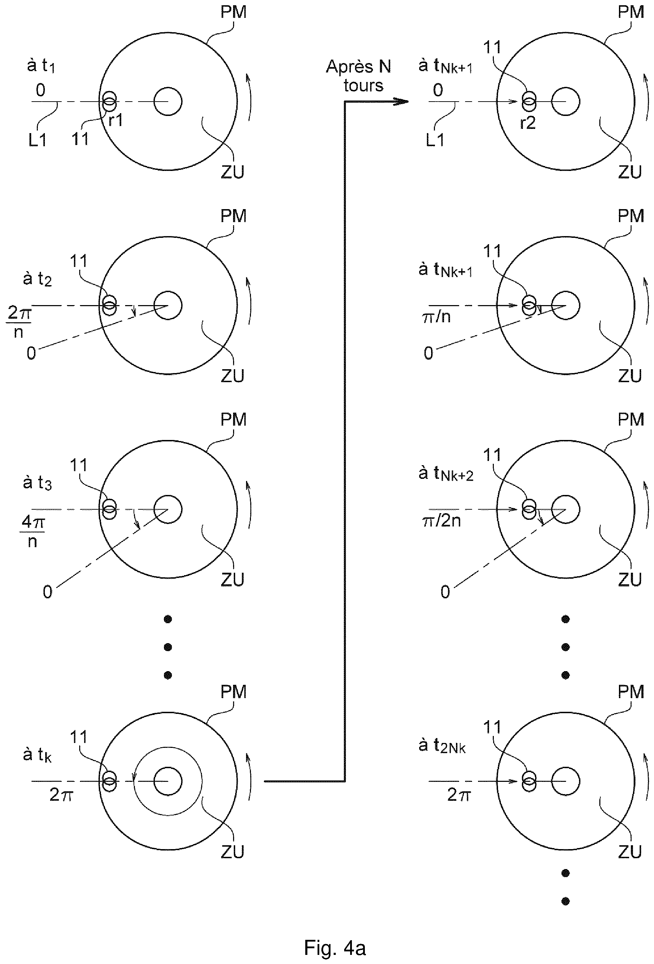

La figure 4a représente les étapes de caractérisation par un premier mode de réalisation selon l'invention du capteur de brulures dans une pièce mécanique pendant l'opération d'usinage. Plus particulièrement, le mode de réalisation décrit correspond à un capteur de brulures C1 comprenant un seul module détecteur 11. Le module détecteur 11 est connecté à des moyens de déplacement permettant de le déplacer selon un mouvement rectiligne le long d'un rayon L1 de la surface usinée S1 de la pièce PM. Il est possible d'implémenter le premier mode de réalisation avec une pluralité de modules détecteurs mobiles 11 mais on se limite à un seul module détecteur mobile pour simplifier l'explication.

La surface usinée étant réalisée par un mouvement de rotation est circulaire. Pour déterminer ainsi les coordonnées spatiales de la zone d'acquisition ZA associée au module détecteur 11 pendant l'usinage, on définit pour chaque instant t un couple de coordonnées (r,θ) avec r la distance du module détecteur 11 de l'axe central de rotation Δ ; et θ la coordonnée angulaire de la zone qui défile devant le détecteur à un instant t lors de la rotation de PM autour de Δ.

À t1, les coordonnées spatiales de la zone d'acquisition ZA sont (r₁,0) et le signal de mesure Vₘₑₛ du module détecteur 11 à courant de Foucault est échantillonné par l'unité d'acquisition UA à cet instant pour analyser l'état de brulure de la zone défilante à travers la zone d'acquisition ZA.

À t2, la pièce mécanique PM continue à tourner autour de l'axe Δ pendant l'usinage. Les coordonnées spatiales de la zone d'acquisition ZA sont (r₁,2π/n) avec n un entier naturel positif non nul. Le signal de mesure Vₘₑₛ du module détecteur 11 à courant de Foucault est échantillonné par l'unité d'acquisition UA à cet instant pour analyser l'état de brulure de la zone défilante à travers la zone d'acquisition ZA (r₁,2π/n).

À t3, la pièce mécanique PM continue à tourner autour de l'axe Δ pendant l'usinage. Les coordonnées spatiales de la zone d'acquisition ZA sont (r₁,4π/n) avec n un entier naturel positif non nul. Le signal de mesure Vₘₑₛ du module détecteur 11 à courant de Foucault est échantillonné par l'unité d'acquisition UA à cet instant pour analyser l'état de brulure de la zone défilante à travers la zone d'acquisition ZA (r₁,4π/n).

Après k acquisitions, la pièce mécanique réalise un tour complet et la zone d'acquisition ZA de coordonnées (r₁,0) défile une deuxième fois devant le module détecteur 11 pour répéter le même cycle d'acquisition et d'usinage simultanées. Avantageusement, cette opération de caractérisation et d'usinage simultanés est répétée pour une pluralité de tours (N tours ici) pour laisser le temps nécessaire pour l'apparition des zones de brulures à caractériser.

Après N tours, et donc à l'instant t_{Nk}, l'unité d'acquisition UA a enregistré au cours du temps N échantillons pour chacun des n points ayant un rayon r₁. Cela permet de générer une cartographie en temps réel pendant les N tours d'usinage pour l'ensemble des n points ayant un rayon r₁.

À l'instant t_{Nk+1}, les moyens de déplacement reliés au module détecteur 11 sont activés pour déplacer le module détecteur 11 selon un mouvement de translation rectiligne le long de la ligne L1 pour caractériser de la même manière le disque composé par l'ensemble des n points ayant un rayon r₂ inférieur à r₁.

Le même procédé détaillé précédemment pour les points à un rayon r₁ est réitéré pour la nouvelle position du module détecteur 11 à un rayon r₂ par rapport à l'axe de rotation de la pièce PM.

Avantageusement, il est possible de se contenter de réaliser la caractérisation des zones de brulures à r=r₂ pour un seul tour, car les brulures sont déjà apparues dans la surface pendant les N premiers tours.

De la même manière, le module détecteur 11 est ensuite déplacé pour une position r₃ différente le long de L1 et ainsi de suite.

Ainsi, il est possible de caractériser les zones de brulures sur l'ensemble de la surface usinée S1 pendant l'usinage en utilisant un seul module détecteur 11 mobile selon une ligne L1 définissant un rayon du disque correspondant à la surface usinée S1. Les moyens de déplacement sont configurés pour déplacer l'au moins module détecteur 11 selon un mouvement de translation rectiligne avec une période spatiale prédéterminée (r₂-r₁ par exemple) et une période temporelle prédéterminée (N tours par exemple) pour contrôler sa position par rapport à l'axe de rotation de la pièce mécanique PM.

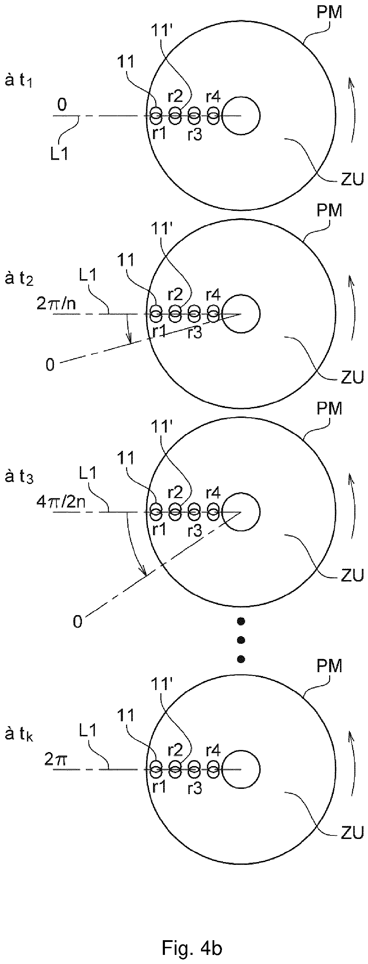

La figure 4b représente les étapes de caractérisation par un second mode de réalisation selon l'invention du capteur de brulures dans une pièce mécanique pendant l'opération d'usinage. Dans ce mode de réalisation, le capteur de zones de brulures C1 comprend une pluralité de modules détecteurs 11 disposés sur une rangée de manière à former une première ligne de détection L1. Ainsi, à chaque instant d'acquisition t, l'ensemble de la ligne de détection L1 est caractérisé par le capteur de zones de brulures C1 avec un angle de rotation θ par rapport à la position initiale de la ligne de détection. Les modules détecteurs 11 sont immobiles est la pièce mécanique est en rotation autour de l'axe Δ pour un usinage et une détection des brulures simultanées. Ainsi, pendant un tour, et avec une fréquence de détection angulaire de 2π/n, le capteur détecte l'état de brulures de n lignes de la surface usinée S1.

Pour éviter les phénomènes d'interférence entre deux modules détecteurs adjacents, chaque module détecteur 11 de ligne de détection L1 est séparé du module détecteur 11' adjacent appartenant à la ligne de détection L1 par une distance supérieure à la moitié du diamètre de la bobine émettrice cylindrique E1.

D'une manière similaire, on définit à chaque instant t, pour chaque module détecteur, un couple de coordonnées (r,θ) avec r la distance du module détecteur de l'axe central de rotation Δ ; et θ la coordonnée angulaire de la zone qui défile devant le détecteur à un instant t lors de la rotation de PM autour de Δ.

À l'instant d'acquisition t₁, la ligne de détection L1 couvre les points suivants L1=[(r₁,0), (r₂,0), (r₃,0), (r₄,0)] et le capteur des zones de brulures C1 mesure les brulures sur la ligne à θ=0. Les signaux de mesures de chaque module détecteur sont échantillonnés à cet instant par l'unité d'acquisition UA. À l'instant d'acquisition t₂ suivant, la pièce mécanique PM tourne toujours et la ligne de détection L1 couvre les points suivants L1=[(r₁,2π/n), (r₂, 2π/n), (r₃, 2π/n), (r₄, 2π/n)]. Le capteur des zones de brulures C1 mesure les brulures sur la ligne à θ=2π/n. De même, les signaux de mesures de chaque module détecteur sont échantillonnés à cet instant par l'unité d'acquisition UA. À l'instant d'acquisition t₃ suivant, la pièce mécanique PM tourne toujours et la ligne de détection L1 couvre les points suivants L1=[(r₁,4π/n), (r₂, 4π/n), (r₃, 4π/n), (r₄, 4π/n)]. Le capteur des zones de brulures C1 mesure les brulures sur la ligne à θ=4π/n. Ainsi après un tour réalisé par la pièce mécanique PM, le capteur des zones de brulures C1 caractérise n lignes de la surface usinée S1 séparé d'un pas angulaire de 2π/n.

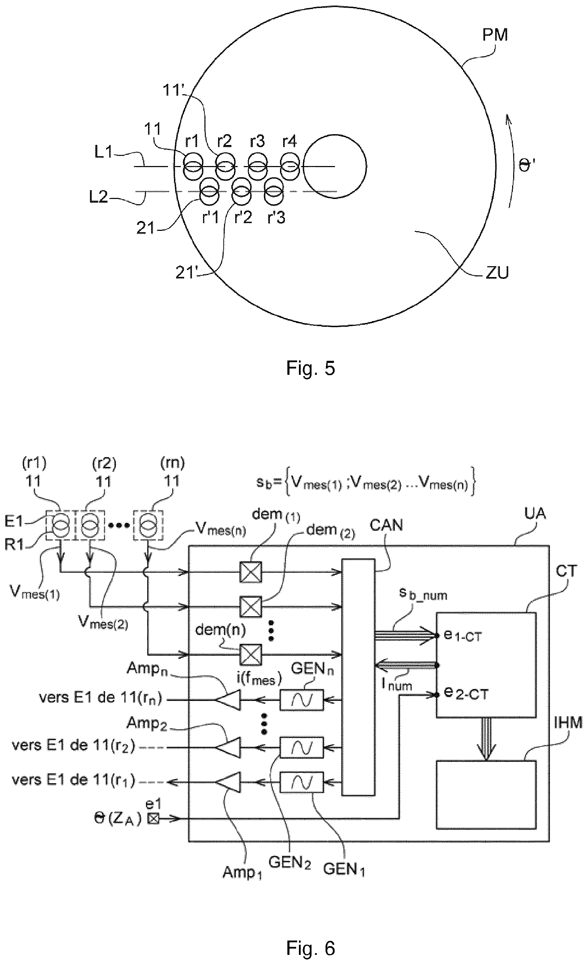

La figure 5 représente une vue de dessus d'un troisième mode de réalisation selon l'invention du capteur de brulures dans une pièce mécanique pendant l'opération d'usinage. Dans ce mode de réalisation, le capteur de zones de brulures C1 comprend un premier groupe de modules détecteurs 11 disposés sur une rangée de manière à former une première ligne de détection L1 comme décrit dans le mode de réalisation précédent. Nous rappelons que pour éviter les phénomènes d'interférence, chaque module détecteur 11 de ligne de détection L1 est séparé du module détecteur 11' adjacent appartenant à la ligne de détection L1 par une distance supérieure à la moitié du diamètre de la bobine émettrice cylindrique E1. Pour améliorer la résolution spatiale de la cartographie des zones de brulures, le capteur des zones de brulures C1 comprend en outre un second groupe de modules détecteurs 21, 21' à courant de Foucault disposés sur une rangée de manière à former une seconde ligne de détection L2 -parallèle à la première ligne de détection L1. Les détecteurs 11 de la seconde ligne de détection L2 étant placés en quinconce par rapport aux modules détecteurs 11, 11' de la première ligne de détection L1. Ainsi, le premier module détecteur 21 de la ligne L2 a un rayon r'₁ tel que r₁<r'₁< r₂ avec r₁ le rayon du premier module détecteur 11 de la ligne L1 et r₂ le rayon du deuxième module détecteur 12 de la ligne L1. L'avantage de ce mode de réalisation est l'augmentation de la résolution spatiale du capteur C1 tout en éliminant les phénomènes d'interférence entre les modules détecteurs adjacents.

la figure 6 illustre un mode de réalisation de l'unité d'acquisition UA intégré dans le capteur de brulures C1 selon l'invention. L'unité d'acquisition UA comprend une pluralité de sources de courants alternatifs {GEN₁, GEN₂, GENₙ}, une pluralité de circuits amplificateurs {Amp₁, Amp₂, Ampₙ}, une pluralité de circuits amplificateurs/démodulateurs {dem₍₁₎, dem₍₂₎, dem₍ₙ₎}, un convertisseur analogique/numérique CAN, un circuit de traitement CT et une interface Homme-Machine IHM.

Pour chaque détecteur de brulures 11 placé à un rayon rᵢ avec i un entier de 1 à N, on associe une source de courant alternatif GENᵢ, un circuit amplificateur Ampᵢ et un circuit amplificateur/démodulateur dem₍ᵢ₎. La source de courant alternatif GENᵢ génère le signal d'excitation i(fₘₑₛ) vers la bobine E1 émettrice du détecteur 11 associé. Le signal d'excitation est amplifié en amont de la bobine émettrice E1 par le circuit amplificateur associé Ampᵢ. Les paramètres de chaque signal d'excitation (fₘₑₛ et amplitude) sont définis par le circuit de traitement.

Comme expliqué précédemment pour la figure 2, dans chaque détecteur de brulures 11 la bobine réceptrice R1 génère une tension de mesure de brulure V_{mes.} La tension de mesure de brulure Vₘₑₛ est ensuite amplifiée et démodulée par le circuit dem₍ᵢ₎ monté en série entre la bobine réceptrice R1 et le convertisseur CAN. Cela permet de synchroniser tous les signaux de mesure Vₘₑₛ , à la fréquence de mesure fₘₑₛ. La pluralité des signaux de mesures des différents détecteurs de brulures 11 sont convertis en un vecteur numérique sb_num par le convertisseur CAN. Le vecteur numérique de mesure est transmis au circuit de traitement CT sur une première entrée e1_CT. Le signal numérique de référence I_num est transmis du circuit de traitement CT au convertisseur CAN pour paramétrer les signaux de références des générateurs GENᵢ.

Nous illustrons le cas d'une synchronisation selon la position angulaire θ. L'unité d'acquisition UA comprend en outre une entrée e1 destinée à recevoir un signal de mesure de position angulaire θ (ZA) correspondant à la coordonnée angulaire de la zone qui défile devant le détecteur à un instant t lors de la rotation de PM autour de Δ fourni par un capteur de position angulaire externe (non représenté). Le signal θ(ZA) est transmis au circuit de traitement CT, via une seconde entrée e2_CT, pour déclencher une acquisition lorsque θ(ZA) est égal à une valeur parmi un ensemble de valeurs prédéterminés.

Le circuit de traitement est configuré pour réaliser les opérations suivantes à chaque instant d'acquisition t, :
- quantifier le degré de brulures en comparant les composantes du vecteur de signaux de mesures numériques sb_num à au moins un signal de référence I_num ;
- Associer le vecteur de signaux de mesures numériques sb_num traitées à l'instant t à une position angulaire θ de la surface usinée ;
- et associer chaque résultat de la quantification de brulure à un rayon rᵢ selon le rang de la composante du vecteur de signaux de mesures numériques sb_num ;

A titre d'exemples non limitatif, il est possible de réaliser le circuit de traitement CT avec un microcontrôleur, un circuit intégré composé d'un réseau de cellules programmables (FPGA) ou un circuit intégré spécifique à une application (ASIC).

Il en résulte que le circuit de traitement CT est configuré de manière à générer un signal de mesure de brulure à l'interface homme-machine IHM (un écran par exemple) comprenant une quantification et une localisation spatio-temporelle des zones de brulures dans la surface usinée en temps réel pendant l'usinage. L'interface homme-machine IHM permet alors de présenter les informations recueillies du circuit de traitement CT pour un contrôle des brulures pendant l'opération d'usinage.

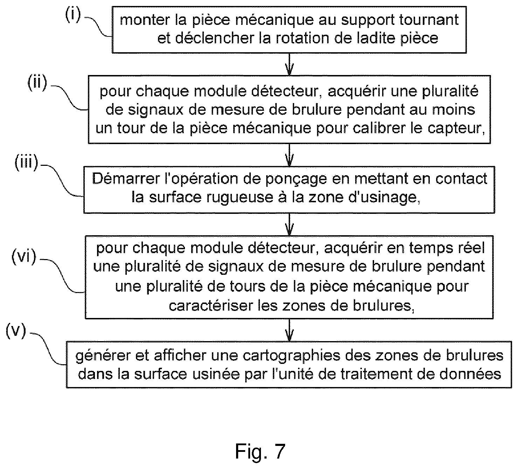

La figure 7 illustre les étapes d'un procédé de caractérisation des zones de brulures dans une pièce mécanique lors d'une opération d'usinage par le premier mode de réalisation de l'appareil d'usinage AP décrit dans la figure 1.

La première étape (i) consiste en le montage de la pièce mécanique au support tournant ROT et déclencher la rotation de ladite pièce PM. La pièce d'usinage PN n'est pas en contact avec la surface supérieure S1 de la pièce à usiner PM ainsi l'opération d'usinage n'est pas entamée. La pièce mécanique PM est maintenue à son état initial.

La deuxième étape (ii) consiste à une étape d'étalonnage ou de calibration pour déterminer une cartographie de l'état initial de la pièce mécanique d'un point de vue des zones de brulures. Ainsi, la valeur de référence originale (le niveau zéro) des zones d'acquisition est déterminée en réalisant, pour chaque module détecteur 11 du capteur C1 l'opération suivante : acquérir une pluralité de signaux de mesure de brulure pendant au moins un tour de la pièce mécanique pour calibrer le capteur C1 tel que chaque signal d'acquisition soit associé à une zone d'acquisition ZA défilant devant ledit module détecteur 11 pendant la rotation sans usinage.

La troisième étape (iii) consiste à démarrer l'opération d'usinage en mettant en contact la surface abrasive de la pièce d'usinage PN à la zone d'usinage ZU. Il est possible d'attendre quelques tours avant de passer à l'étape suivante pour laisser un temps d'usinage nécessaire pour l'apparition de zones de brulures.

La quatrième étape (vi) consiste à caractériser en temps réel les zones de brulures selon l'une quelconques de méthodes détaillées précédemment dans les figures 4a et 4b selon le mode de réalisation de l'invention. Ainsi, à chaque instant d'acquisition, un vecteur de signaux de mesure de brulure sb est généré composé de la pluralité des signaux de mesure V_{mes.} Pour chaque module détecteur 11, on réalise l'opération suivante: acquérir en temps réel une pluralité de signaux de mesure de brulure pendant une pluralité de tours de la pièce mécanique pour caractériser les zones de brulures Z1. Chaque signal d'acquisition Vₘₑₛ est associé à une zone d'acquisition ZA à des coordonnées (r,θ) défilant devant ledit module détecteur 11 pendant la rotation.

La cinquième étape (v) consiste à générer et afficher une cartographie des zones de brulures Z1 de la surface usinée S1 par l'unité de traitement de données UA. La génération de la cartographie peut-être après la fin de l'usinage en une seule fois ou bien en continue d'une manière simultanée à la quatrième étape d'acquisition (vi).

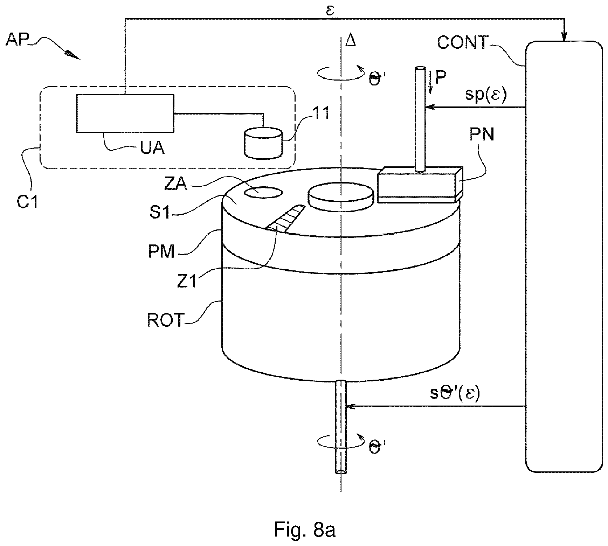

La figure 8a représente un second mode de réalisation de l'appareil d'usinage AP comprenant un capteur C1 à courant de Foucault pour la détection des zones de brulures en temps réel. Le second mode de réalisation reprend toutes les caractéristiques du premier mode de réalisation décrit sur la figure 1. L'appareil d'usinage AP comprend en outre une boucle de rétroaction reliant l'unité d'acquisition UA à l'unité de contrôle CONT. En effet, l'unité d'acquisition UA génère un signal de comparaison ε correspondant au résultat de comparaison de l'amplitude d'au moins un signal de mesure Vₘₑₛ avec un seuil de brulure prédéterminée V_{mes_max}. L'unité de contrôle CONT reçoit le signal de comparaison ε et commande la pression exercée par la surface abrasive sur la zone d'usinage lors de l'opération d'usinage selon le signal de comparaison ε. De plus, L'unité de contrôle CONT commande la vitesse de rotation de la pièce mécanique PM lors de l'opération d'usinage selon le signal de comparaison ε. Ainsi, la vitesse de rotation θ' ou la pression exercée p ou les deux paramètres sont diminués si l'amplitude d'un ou de plusieurs signaux de mesure Vₘₑₛ dépasse le seuil de brulures V_{mes_max}. Cela permet d'améliorer la fiabilité des pièces usinées en contrôlant les paramètres de l'opération d'usinage selon l'évolution en temps réel de l'état des zones de brulures.

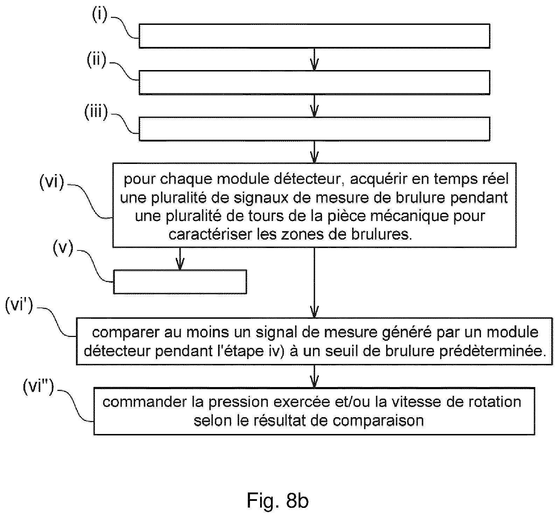

La figure 8b illustre les étapes d'un procédé de caractérisation des zones de brulures dans une pièce mécanique lors d'une opération d'usinage par le second mode de réalisation de l'appareil d'usinage.

Le procédé de caractérisation réalisé par le second mode de réalisation de l'appareil d'usinage reprend les mêmes étapes du premier procédé préalablement décrit et comprend en outre une étape (vi') de comparaison d'au moins un signal de mesure généré par un module détecteur 11 pendant l'étape iv) à un seuil de brulure prédéterminée.

Cette étape peut être réalisée par l'unité de contrôle CONT qui reçoit l'ensemble des signaux Vₘₑₛ du capteur C1. Alternativement, la comparaison peut être réalisée par l'unité d'acquisition UA faisant partie du capteur C1 qui génère un signal de comparaison ε entre l'amplitude d'au moins un signal de mesure Vₘₑₛ et un seuil de brulure prédéterminé.

Le procédé de caractérisation comprend en outre une étape (vi") consistant à commander, par l'unité de contrôle CONT, la pression exercée et/ou la vitesse de rotation selon le résultat de comparaison réalisé dans l'étape précédente.

## Revendications

1. Capteur (C1) pour la caractérisation des zones de brulures (Z1) dans une pièce mécanique (PM) en un matériau électriquement conducteur au cours d'une opération d'usinage d'une surface (S1) de la pièce mécanique (PM) par un appareil d'usinage (AP) ;
le capteur (C1) étant destiné à être monté sur l'appareil d'usinage (AP) ;
le capteur (C1) comprenant :
- un premier groupe de modules détecteurs (11) à courant de Foucault sans contact disposés sur une rangée de manière à former une première ligne de détection (L1), chaque module détecteur (11) à courant de Foucault comprenant :
∘ une bobine émettrice (E1) parcourue par un courant électrique alternatif pour générer un champ magnétique de référence ;
∘ une bobine réceptrice (R1) configurée pour capter un signal de mesure selon la variation des caractéristiques électromagnétiques dans la zone d'acquisition (ZA) associée au cours de l'usinage ;
- une unité de traitement de données (UA) configurée pour générer, au cours de l'usinage, une cartographie de la localisation et de la quantification des zones de brulures (Z1) dans la surface (S1) usinée à partir du signal de mesure de la bobine réceptrice.

2. Capteur (C1) selon la revendication 1 dans lequel la bobine émettrice (E1) et la bobine réceptrice (R1) sont cylindriques.

3. Capteur (C1) selon la revendication 2 dans lequel la bobine réceptrice (R1) est constituée d'un empilement d'une pluralité de bobines élémentaires cylindriques.

4. Capteur (C1) selon l'une quelconque des revendications 2 ou 3 dans lequel la bobine émettrice cylindrique (E1) est empilée avec la bobine réceptrice cylindrique (R1) tel que la surface latérale de la bobine émettrice cylindrique (E1) passe par l'axe central de la bobine réceptrice cylindrique (R1).

5. Capteur (C1) selon l'une quelconque des revendications 2 à 4 dans lequel le diamètre de la bobine émettrice cylindrique (E1) et de la bobine réceptrice cylindrique (R1) est compris entre 3mm et 10mm.

6. Capteur (C1) selon la revendication précédente dans lequel chaque module détecteur (11) de la première ligne de détection est séparé du module détecteur (11') adjacent par une seconde distance prédéterminée supérieure à la moitié du diamètre de la bobine émettrice cylindrique (E1).

7. Capteur (C1) selon l'une quelconque des revendications précédentes comprenant en outre un second groupe de modules détecteurs (11) à courant de Foucault disposés sur une rangée de manière à former une seconde ligne de détection (L2) parallèle à la première ligne de détection (L1),
les modules détecteurs du second groupe étant placés en quinconce par rapport aux modules détecteurs du premier groupe.

8. Appareil d'usinage (AP) d'une surface (S1) d'une pièce mécanique (PM) en un matériau électriquement conducteur comprenant :
- Un support tournant (ROT) destiné à accueillir la pièce mécanique (PM) et configuré pour mettre en rotation ladite pièce autour d'un axe perpendiculaire à la surface usinée (S1) avec une vitesse de rotation prédéterminée ;
- Un capteur (C1) selon l'une quelconque des revendications précédentes; pour caractériser des zones de brulures (Z1) dans la pièce mécanique (PM) au cours de l'usinage ; l'au moins un module détecteur (11) à courant de Foucault étant placé en regard d'une zone d'acquisition (ZA) associée de ladite surface (S1) à une première distance prédéterminée non nulle ;
- Une pièce d'usinage (PN) présentant une surface abrasive placée en contact avec une zone d'usinage (ZU) de ladite surface (S1) de manière à détruire de la matière en surface de la zone d'usinage lors de la rotation de la pièce mécanique (PM).

9. Appareil d'usinage (AP) selon la revendication 8 dans lequel la première distance prédéterminée est comprise entre 0,3mm et 1mm.

10. Appareil d'usinage (AP) selon l'une quelconque des revendications 8 ou 9 comprenant en outre une unité de contrôle (CONT) configuré pour :
- commander une pression exercée par la surface abrasive sur la zone d'usinage lors de l'opération d'usinage ;
- commander la vitesse de rotation de la pièce mécanique (PM) lors de l'opération d'usinage.

11. Appareil d'usinage (AP) selon l'une quelconque des revendications 8 à 10 dans lequel l'unité de contrôle (CONT) est reliée au capteur (C1) par une boucle de rétroaction et commande la pression exercée et/ou la vitesse de rotation en fonction du résultat de comparaison de l'amplitude du signal de mesure avec un seuil de brulure prédéterminée.

12. Appareil d'usinage (AP) selon l'une quelconque des revendications 8 à 11 dans lequel le capteur (C1) comprend une pluralité de modules détecteurs (11) à courant de Foucault disposés en rangée de manière à caractériser à chaque instant d'acquisition un rayon de la surface usinée (S1) à partir de l'axe de rotation (Δ).

13. Appareil d'usinage (AP) selon l'une quelconque des revendications 8 à 1 en combinaison avec l'une quelconque des revendications 1 à 5 comprenant en outre un système de déplacement pour déplacer l'au moins un module détecteur (11) selon un mouvement de translation rectiligne avec une période spatiale prédéterminée et une période temporelle prédéterminée pour contrôler sa position par rapport à l'axe de rotation de la pièce mécanique (PM) ;
le mouvement de translation rectiligne décrivant un rayon de la surface usinée (S1) à partir de l'axe de rotation (Δ).

14. Procédé de caractérisation des zones de brulures (Z1) dans une pièce mécanique (PM) en un matériau électriquement conducteur lors d'une opération d'usinage d'une surface (S) de la pièce mécanique (PM) par un appareil d'usinage (AP) selon l'une quelconque des revendications 9 à 14 comprenant les étapes suivantes :
i- monter la pièce mécanique sur le support tournant (ROT) et déclencher la rotation de ladite pièce (PM) ;
ii- pour chaque module détecteur (11) ; acquérir une pluralité de signaux de mesure de brulure pendant au moins un tour de la pièce mécanique pour calibrer le capteur (C1) ; chaque signal d'acquisition étant associé à une zone d'acquisition (ZA) défilant devant ledit module détecteur (11) pendant la rotation ;
iii- démarrer l'opération d'usinage en mettant en contact la surface abrasive à la zone d'usinage (ZU) ;
iv- pour chaque module détecteur (11) ; acquérir au cours de l'usinage une pluralité de signaux de mesure de brulure pendant une pluralité de tours de la pièce mécanique pour caractériser les zones de brulures (Z1); chaque signal d'acquisition étant associé à une zone d'acquisition (ZA) défilant devant ledit module détecteur (11) pendant la rotation ;
v- générer et afficher une cartographie des zones de brulures (Z1) dans la surface (S) usinée par l'unité de traitement de données (UA).

15. Procédé de caractérisation des zones de brulures (Z1) selon la revendication 14 comprenant en outre les étapes suivantes :
iv'- comparer au moins un signal de mesure généré par un module détecteur (11) pendant l'étape iv) à un seuil de brulure prédéterminée par l'unité de contrôle (CONT) ;
iv"- commander, par l'unité de contrôle (CONT), la pression exercée et/ou la vitesse de rotation selon le résultat de comparaison ;

16. Procédé de caractérisation des zones de brulures (Z1) selon l'une quelconque des revendications 14 ou 15 comprenant en outre l'étape suivante :
- déplacer au moins un module détecteur (11) selon un mouvement de translation rectiligne avec une période spatiale prédéterminée et une période temporelle prédéterminée pour contrôle sa position par rapport à l'axe de rotation de la pièce mécanique (PM).
